# EUROPEAN PATENT SPECIFICATION

(11) **EP 3 575 108 B1**
(45) Date of publication and mention of the grant of the patent: **02.11.2022**
(21) Application number: 19176096.6
(22) Date of filing: 23.05.2019
(51) Int. Cl.: B60C 7/08, B60C 11/04, B60C 11/03, B60C 11/12

(54) **TREAD FOR A PNEUMATIC TIRE AND PNEUMATIC TIRE**
LAUFSTREIFEN FÜR EINEN LUFTREIFEN SOWIE LUFTREIFEN
BANDE DE ROULEMENT POUR PNEUMATIQUE ET PNEUMATIQUE

(30) Priority: 30.05.2018 US 201815992233
(43) Date of publication of application: 04.12.2019
(73) Proprietor: The Goodyear Tire & Rubber Company, Akron, OH 44316 (US)
(72) Inventor: VAISSAUD, Julien Alexandre, B-6700 Arlon (BE)
(74) Representative: Kutsch, Bernd

(56) References cited:
- EP-A1- 2 489 527
- DE-A1- 1 605 644
- FR-A1- 2 123 329
- GB-A- 546 975
- GB-A- 2 056 925
- US-A- 4 166 490
- US-A1- 2005 230 020

## Description

### Field of Invention

The present invention relates to a pneumatic tire with an improved tread, and more particularly, relates to a pneumatic tire tread having improved acoustic characteristics.

### Background of the Invention

Conventionally, in addition to circumferential main grooves and lateral grooves, pneumatic tire treads may have longitudinal/lateral sipes on a tread surface in order to demonstrate favorable functional characteristics (e.g., low rolling resistance, good traction, good durability, etc.).

EP 2 489 527 A1 describes a tread in accordance with the preamble of claim 1. Similar treads are known from US 4,166,490, FR 2 123 329 A1, GB 2 056 925 A and US 2005/230020 A1.

DE 16 05 644 A describes a tire tread having a plurality of cylindrical chambers in the tread for receiving water.

GB 546 975 A describes a tread having a plurality of holes in tread blocks for making these softer and more flexible.

### Definitions

The following definitions are controlling for the disclosed invention.

"Axial" and "Axially" means the lines or directions that are parallel to the axis of rotation of the tire.

"Axially Inward" means in an axial direction toward the equatorial plane.

"Axially Outward" means in an axial direction away from the equatorial plane.

"Circumferential" means circular lines or directions extending along the perimeter of the surface of the annular tread perpendicular to the axial direction.

"dBA" means A-weighted decibels, abbreviated dBA, or dBa, or dB(a), which are an expression of the relative loudness of sounds in air as perceived by the human ear. In the A-weighted system, the decibel of sounds at low frequencies are reduced, compared with unweighted decibels, in which no correction is made for audio frequency. This correction is made because the human ear is less sensitive at low audio frequencies, especially below 1000 hertz, than at high audio frequencies.

"Directional Tread Pattern" means a tread pattern designed for specific direction of rotation.

"Equatorial Plane" means the plane perpendicular to the tire's axis of rotation and passing through the center of its tread; or the plane containing the circumferential centerline of the tread.

"Groove" means an elongated void area in a tread that may extend circumferentially or laterally in the tread in a straight, curved or zigzag manner. It is understood that all groove widths are measured perpendicular to the centerline of the groove.

"Lateral" means a direction going from one sidewall of the tire towards the other sidewall of the tire.

"Notch" means a void area of limited length that may be used to modify the variation of net to gross void area at the edges of blocks.

"Radial" and "radially" mean directions radially toward or away from the axis of rotation of the tire.

"Shoulder" means the upper portion of sidewall just below the tread edge.

"Sipe" means a groove having a width in the range of 0.2 percent to 0.8 percent of the tread width. Sipes are typically formed by steel blades having a 0.4 to 1.6 mm, inserted into a cast or machined mold.

"Tangential" and "Tangentially" refer to segments of circular curves that intersect at a point through which can be drawn a single line that is mutually tangential to both circular segments.

"Tread" means the ground contacting portion of a tire.

"Tread width" (TW) means the greatest axial distance across the tread, when measured (using a footprint of a tire,) laterally from shoulder to shoulder edge, when mounted on the design rim and subjected to a specified load and when inflated to a specified inflation pressure for said load.

"Void Space" means areas of the tread surface comprising grooves, notches and sipes.

### Summary of the Invention

The invention relates to a tire tread in accordance with claim 1 and to a tire in accordance with claim 15.

Dependent claims refer to preferred embodiments of the invention.

A first tread for a tire in accordance with an aspect of the present invention includes a first circumferential groove axially separating a circumferential first rib and a second circumferential rib, a first outer surface of the first rib having at least one circumferential column of circumferential, double blind perforations extending linearly fully around the first outer surface of the first rib.

According to another aspect of the present invention, a second outer surface of the second rib has at least one circumferential column of circumferential, double blind perforations extending linearly fully around the second outer surface of the second rib.

According to a preferred aspect of the first tread, the first outer surface has between 2 and 12 circumferential columns of circumferential, double blind perforations extending linearly fully around the first outer surface of the first rib.

According to yet another preferred aspect of the first tread, the second outer surface has between 2 and 12 circumferential columns of circumferential, double blind perforations extending linearly fully around the second outer surface of the second rib.

According to the invention, the perforations of the first rib have a radial depth between 1.0 mm and 3.0 mm.

According to the invention, the perforations of the first rib have an axial width between 0.5 mm and 1.5 mm.

According to still another preferred aspect of the first tread, the columns of perforations of the first rib have an axial spacing, perforation axial edge to adjacent perforation axial edge, ranging from 2.0 mm to 8.0 mm, or 3.0 mm to 5.0 mm.

According to yet another preferred aspect of the first tread, the perforations of the first rib have a circumferential length between 1.0 mm, and 5.0 mm, or 3.0 mm and 4.0 mm.

According to still another preferred aspect of the first tread, the perforations of the first rib have a circumferential length between 1.0 mm, and 5.0 mm, or 1.5 mm and 2.5 mm.

According to yet another preferred aspect of the first tread, the perforations of the first rib have a circumferential length between 1.0 mm, and 5.0 mm, or 0.9 mm and 1.2 mm.

A second tread for a tire in accordance with an aspect of the present invention includes a first circumferential groove axially separating a circumferential first rib and a circumferential second rib and a second circumferential groove axially separating the second rib from and a circumferential third rib. A first outer surface of the first rib has a first pattern of circumferential columns of circumferential, double blind perforations extending linearly fully around the first outer surface of the first rib. A second outer surface of the second rib has a second pattern of circumferential columns of circumferential, double blind perforations extending linearly fully around the second outer surface of the second rib. A third outer surface of the third rib has a third pattern of circumferential columns of circumferential, double blind perforations extending linearly fully around the third outer surface of the third rib. The first pattern is different from the second pattern and the third pattern and the second pattern is different from the first pattern and the third pattern.

According to a preferred aspect of the second tread, the first outer surface of the first rib has at least one circumferential column of circumferential, double blind perforations extending linearly fully around the first outer surface of the first rib, the second outer surface of the second rib has at least one circumferential column of circumferential, double blind perforations extending linearly fully around the second outer surface of the second rib, and the third outer surface of the third rib has at least one circumferential column of circumferential, double blind perforations extending linearly fully around the third outer surface of the third rib.

According to still another preferred aspect of the second tread, the first outer surface has between 2 and 12 circumferential columns of circumferential, double blind perforations extending linearly fully around the first outer surface of the first rib, the second outer surface has between 12 and 24 circumferential columns of circumferential, double blind perforations extending linearly fully around the second outer surface of the second rib, and the third outer surface has between 2 and 12 circumferential columns of circumferential, double blind perforations extending linearly fully around the third outer surface of the third rib.

According to yet another preferred aspect of the second tread, the perforations of the first, second and third ribs have a radial depth between 1.0 mm and 3.0 mm.

According to still another preferred aspect of the second tread, the perforations of the first, second and third ribs have an axial width between 0.5 mm and 1.5 mm.

According to yet another preferred aspect of the second tread, the columns of perforations of the first and third ribs have an axial spacing, perforation axial edge to adjacent perforation axial edge, ranging from 2.0 mm to 8.0 mm.

According to still another preferred aspect of the second tread, the columns of perforations of the second rib have an axial spacing, perforation axial edge to adjacent perforation axial edge, ranging from 2.0 mm to 8.0 mm, or 1.0 mm to 3.0 mm.

According to yet another preferred aspect of the second tread, the perforations of the first rib have a circumferential length between 1.0 mm, and 5.0 mm, or 3.0 mm and 4.0 mm.

According to still another preferred aspect of the second tread, the perforations of the second rib have a circumferential length between 1.0 mm, and 5.0 mm, or 1.5 mm and 2.5 mm.

According to yet another preferred aspect of the second tread, the perforations of the third rib have a circumferential length between 1.0 mm, and 5.0 mm, or 0.9 mm and 1.2 mm.

### Brief Description of the Drawings

The present invention will be more clearly understood by the following description of some examples thereof, with reference to the accompanying drawings, in which:
FIG. 1 is a schematic orthogonal front view of a pneumatic tire having a first example tread in accordance with the present invention.
FIG. 2 is a schematic orthogonal detail view of the pneumatic tire and tread of FIG. 1.
FIG. 3 is a schematic orthogonal front view of a pneumatic tire having a second example tread in accordance with the present invention.
FIG. 4 is a schematic orthogonal detail view of the pneumatic tire and tread of FIG. 3.
FIG. 5 is a schematic orthogonal front view of a pneumatic tire having a third example tread in accordance with the present invention.
FIG. 6 is a schematic orthogonal detail view of the pneumatic tire and tread of FIG. 5.
FIG. 7 is a schematic orthogonal front view of a pneumatic tire having a fourth example tread in accordance with the present invention.
FIG. 8 is a schematic orthogonal detail view of the pneumatic tire and tread of FIG. 7.

### Description of Example Embodiments of the Present Invention

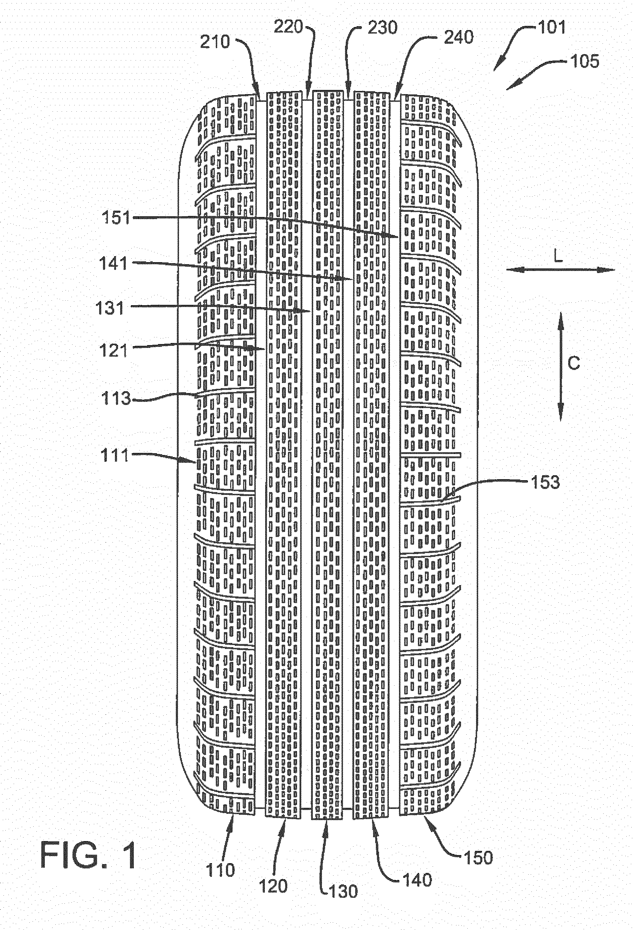

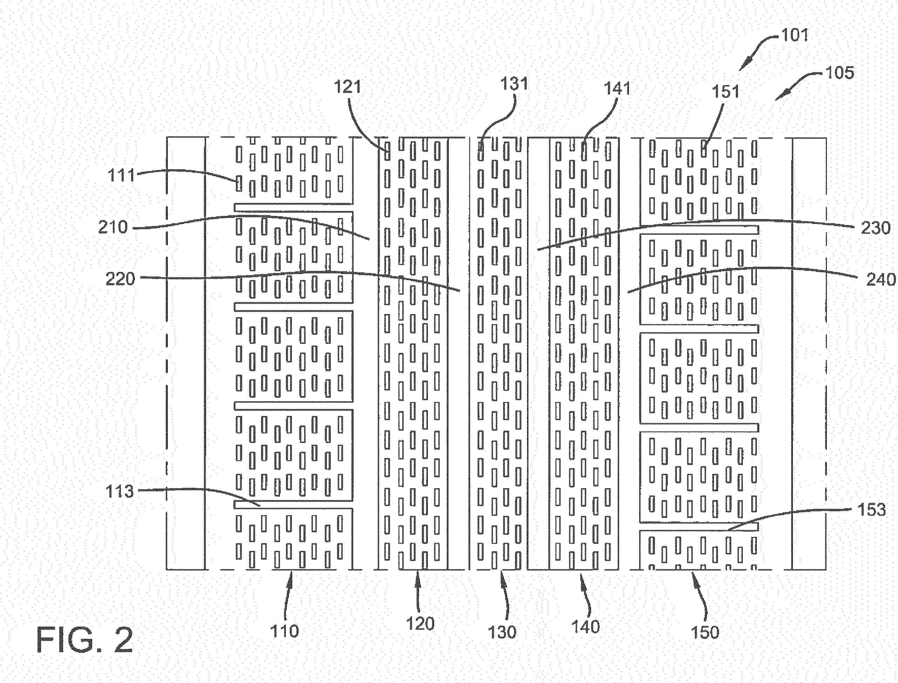

As shown in FIGS. 1-2, a pneumatic tire 101 in accordance with a first example of the present invention includes a tread 105 with a first main circumferential groove 210, a second main circumferential groove 220, optionally a third main circumferential groove 230, and optionally a fourth main circumferential groove 240 all extending in a circumferential direction C of the pneumatic tire 101 forming the tread 105. Five land portions, or ribs 110, 120, 130, 140, 150 may be formed by these main circumferential grooves 210, 220, 230, 240. Each of the first and fifth ribs 110, 150 may have additional lateral grooves 113, 153 extending laterally L across the ribs 110, 150 forming discreet and circumferentially repeating blocks, or tread elements. The main circumferential grooves 210, 220, 230, 240 preferably have a lateral width between 3.0 mm and 20.0 mm each and an example radial depth between 5.0 mm and 13.0 mm.

The first rib 110, which is in the example the shoulder rib 110, further has a plurality of circumferential, double blind perforations 111, or "dashes", extending linearly fully around the circumference of the first rib. These perforations 111 may (not shown) or may not (FIGS. 1-2) continue circumferentially through each of the lateral grooves 113. The number of columns of perforations 111 preferably ranges from 2 to 6, or 2 to 12. The perforations 111 have depths ranging from 1.0 mm to 3.0 mm, or about 2.0 mm. The perforations 111 have widths ranging from 0.5 mm to 1.5 mm. The perforations 111 preferably have a lateral spacing, perforation lateral edge to adjacent perforation lateral edge, ranging from 2.0 mm to 8.0 mm, or 3.0 mm to 5.0 mm. Each perforation 111 preferably has a circumferential length between 1.0 mm, and 5.0 mm, or 3.0 mm and 4.0 mm. The perforations 111 preferably have a circumferential spacing, perforation end to adjacent perforation end, ranging from 3.0 mm to 5.0 mm.

The columns of perforations 111 are preferably arranged such that the perforations of each column are circumferentially offset from the perforations of the adjacent column(s) (FIGS. 1-2). The depth, width, lateral spacing, and circumferential spacing of the perforations 111 all effect the amount of ambient noise mitigation produced by the perforations. Generally, 2.0 mm may be an optimal depth and a greater density of perforations 111 may decrease noise more than a lesser density of perforations.

The second shoulder rib 120 further has a plurality of circumferential, double blind perforations 121, or "dashes", extending linearly fully around the circumference of the second rib. The number of columns of perforations 121 preferably range from 2 to 6, or 2 to 12. The perforations 121 preferably have depths ranging from 1.0 mm to 3.0 mm, or about 2.0 mm. The perforations 121 preferably have widths ranging from 0.5 mm to 1.5 mm. The perforations 121 preferably have a lateral spacing, perforation lateral edge to adjacent perforation lateral edge, ranging from 2.0 mm to 8.0 mm, or 3.0 mm to 5.0 mm. Each perforation 121 preferably has a circumferential length between 1.0 mm, and 5.0 mm, or 3.0 mm and 4.0 mm. The perforations 121 preferably have a circumferential spacing, perforation end to adjacent perforation end, ranging from 3.0 mm to 5.0 mm.

The columns of perforations 121 are preferably arranged such that the perforations of each column are circumferentially offset from the perforations of the adjacent column(s) (FIGS. 1-2). The depth, width, lateral spacing, and circumferential spacing of the perforations 121 all effect the amount of ambient noise mitigation produced by the perforations. Generally, 2.0 mm may be an optimal depth and a greater density of perforations 121 may decrease noise more than a lesser density of perforations.

The third shoulder rib 130 preferably also has a plurality of circumferential, double blind perforations 131, or "dashes", extending linearly fully around the circumference of the third rib. The number of columns of perforations 131 preferably ranges from 2 to 6, or 2 to 12. The perforations 131 preferably have depths ranging from 1.0 mm to 3.0 mm, or about 2.0 mm. The perforations 131 preferably have widths ranging from 0.5 mm to 1.5 mm. The perforations 131 preferably have a lateral spacing, perforation lateral edge to adjacent perforation lateral edge, ranging from 2.0 mm to 8.0 mm, or 3.0 mm to 5.0 mm. Each perforation 131 preferably has a circumferential length between 1.0 mm, and 5.0 mm, or 3.0 mm and 4.0 mm. The perforations 121 preferably have a circumferential spacing, perforation end to adjacent perforation end, ranging from 3.0 mm to 5.0 mm.

The columns of perforations 131 are preferably arranged such that the perforations of each column are circumferentially offset from the perforations of the adjacent column(s) (FIGS. 1-2). The depth, width, lateral spacing, and circumferential spacing of the perforations 131 all effect the amount of ambient noise mitigation produced by the perforations. Generally, 2.0 mm may be an optimal depth and a greater density of perforations 131 may decrease noise more than a lesser density of perforations.

The fourth shoulder rib 140 preferably also has a plurality of circumferential, double blind perforations 141, or "dashes", extending linearly fully around the circumference of the fourth rib. The number of columns of perforations 141 preferably ranges from 2 to 6, or 2 to 12. The perforations 141 preferably have depths ranging from 1.0 mm to 3.0 mm, or about 2.0 mm. The perforations 141 preferably have widths ranging from 0.5 mm to 1.5 mm. The perforations 141 preferably have a lateral spacing, perforation lateral edge to adjacent perforation lateral edge, ranging from 2.0 mm to 8.0 mm, or 3.0 mm to 5.0 mm. Each perforation 141 preferably has a circumferential length between 1.0 mm, and 5.0 mm, or 3.0 mm and 4.0 mm. The perforations 141 preferably have a circumferential spacing, perforation end to adjacent perforation end, ranging from 3.0 mm to 5.0 mm.

The columns of perforations 141 are preferably arranged such that the perforations of each column are circumferentially offset from the perforations of the adjacent column(s) (FIGS. 1-2). The depth, width, lateral spacing, and circumferential spacing of the perforations 141 all effect the amount of ambient noise mitigation produced by the perforations. Generally, 2.0 mm may be an optimal depth and a greater density of perforations 141 may decrease noise more than a lesser density of perforations.

The fifth shoulder rib 150 preferably also has a plurality of circumferential, double blind perforations 151, or "dashes", extending linearly fully around the circumference of the fifth rib. These perforations 151 may (not shown) or may not (FIGS. 1-2) continue circumferentially through each of the lateral grooves 153. The number of columns of perforations 151 preferably ranges from 2 to 6, or 2 to 12. The perforations 151 preferably have depths ranging from 1.0 mm to 3.0 mm, or about 2.0 mm. The perforations 151 preferably have widths ranging from 0.5 mm to 1.5 mm. The perforations 151 preferably have a lateral spacing, perforation lateral edge to adjacent perforation lateral edge, ranging from 2.0 mm to 8.0 mm, or 3.0 mm to 5.0 mm. Each perforation 151 preferably has a circumferential length between 1.0 mm, and 5.0 mm, or 3.0 mm and 4.0 mm. The perforations 151 preferably have a circumferential spacing, perforation end to adjacent perforation end, ranging from 3.0 mm to 5.0 mm.

The columns of perforations 151 are preferably arranged such that the perforations of each column are circumferentially offset from the perforations of the adjacent column(s) (FIGS. 1-2). The depth, width, lateral spacing, and circumferential spacing of the perforations 151 all effect the amount of ambient noise mitigation produced by the perforations. Generally, 2.0 mm may be an optimal depth and a greater density of perforations 151 may decrease noise more than a lesser density of perforations.

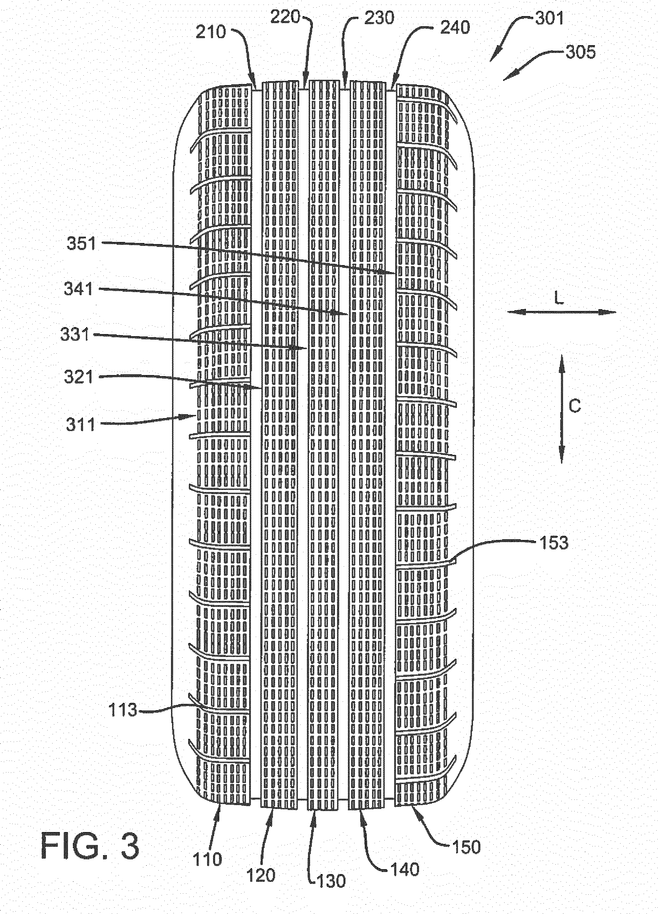

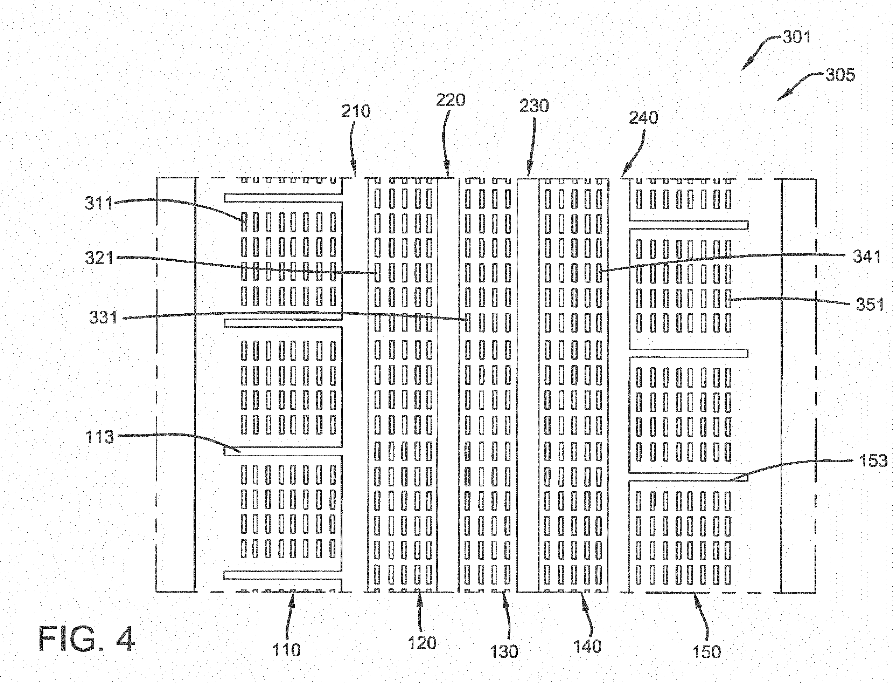

As shown in FIGS. 3-4, a pneumatic tire 301 in accordance with a second example of the present invention includes a tread 305 with a first main circumferential groove 210, a second main circumferential groove 220, a third main circumferential groove 230, and a fourth main circumferential groove 240 all extending in a circumferential direction C of the pneumatic tire 301 forming the tread 305. Like structures from FIG. 1-2 are given the same indicia. Five land portions, or ribs 110, 120, 130, 140, 150 are formed by these main circumferential grooves 210, 220, 230, 240. Each of the first and fifth ribs 110, 150 may have additional lateral grooves 113, 153 extending laterally L across the ribs 110, 150 forming discreet and circumferentially repeating blocks, or tread elements. The main circumferential grooves 210, 220, 230, 240 preferably have a lateral width between 3.0 mm and 20.0 mm and an example radial depth between 5.0 mm and 13.0 mm.

The first shoulder rib 110 may further have a plurality of circumferential, double blind perforations 311, or "dashes", extending linearly fully around the circumference of the first rib. The number of columns of perforations 311 may range from 2 to 6, or 2 to 12. The perforations 311 have depths ranging from 1.0 mm to 3.0 mm, or about 2.0 mm. The perforations 311 may have widths ranging from 0.5 mm to 1.5 mm. The perforations 311 may have a lateral spacing, perforation lateral edge to adjacent perforation lateral edge, ranging from 3.0 mm to 5.0 mm. Each perforation 311 may have a circumferential length between 1.0 mm, and 5.0 mm, or 1.5 mm and 2.5 mm. The perforations 311 may have a circumferential spacing, perforation end to adjacent perforation end, ranging from 3.0 mm to 5.0 mm.

The columns of perforations 311 may be arranged such that the perforations of each column are circumferentially aligned with the perforations of the adjacent columns (FIGS. 3-4). The depth, width, lateral spacing, and circumferential spacing of the perforations 311 may all effect the amount of ambient noise mitigation produced by the perforations. Generally, 2.0 mm may be an optimal depth and a greater density of perforations 311 may decrease noise more than a lesser density of perforations.

The second shoulder rib 120 may further have a plurality of circumferential, double blind perforations 321, or "dashes", extending linearly fully around the circumference of the second rib. The number of columns of perforations 321 may range from 2 to 6, or 2 to 12. The perforations 321 may have depths ranging from 1.0 mm to 3.0 mm, or about 2.0 mm. The perforations 321 may have widths ranging from 0.5 mm to 1.5 mm. The perforations 321 may have a lateral spacing, perforation lateral edge to adjacent perforation lateral edge, ranging from 2.0 mm to 8.0 mm, or 3.0 mm to 5.0 mm. Each perforation 321 may have a circumferential length between 1.0 mm, and 5.0 mm, or 1.5 mm and 2.5 mm. The perforations 321 may have a circumferential spacing, perforation end to adjacent perforation end, ranging from 3.0 mm to 5.0 mm.

The columns of perforations 321 may be arranged such that the perforations of each column are circumferentially aligned with the perforations of the adjacent columns (FIGS. 3-4). The depth, width, lateral spacing, and circumferential spacing of the perforations 321 may all effect the amount of ambient noise mitigation produced by the perforations. Generally, 2.0 mm may be an optimal depth and a greater density of perforations 321 may decrease noise more than a lesser density of perforations.

The third shoulder rib 130 may further have a plurality of circumferential, double blind perforations 331, or "dashes", extending linearly fully around the circumference of the third rib. The number of columns of perforations 331 may range from 2 to 6, or 2 to 12. The perforations 331 may have depths ranging from 1.0 mm to 3.0 mm, or about 2.0 mm. The perforations 331 may have widths ranging from 0.5 mm to 1.5 mm. The perforations 331 may have a lateral spacing, perforation lateral edge to adjacent perforation lateral edge, ranging from 2.0 mm to 8.0 mm, or 3.0 mm to 5.0 mm. Each perforation 331 may have a circumferential length between 1.0 mm, and 5.0 mm, or 1.5 mm and 2.5 mm. The perforations 321 may have a circumferential spacing, perforation end to adjacent perforation end, ranging from 3.0 mm to 5.0 mm.

The columns of perforations 331 may be arranged such that the perforations of each column are circumferentially aligned with the perforations of the adjacent columns (FIGS. 3-4). The depth, width, lateral spacing, and circumferential spacing of the perforations 331 may all effect the amount of ambient noise mitigation produced by the perforations. Generally, 2.0 mm may be an optimal depth and a greater density of perforations 331 may decrease noise more than a lesser density of perforations.

The fourth shoulder rib 140 may further have a plurality of circumferential, double blind perforations 341, or "dashes", extending linearly fully around the circumference of the fourth rib. The number of columns of perforations 341 may range from 2 to 6, or 2 to 12. The perforations 341 may have depths ranging from 1.0 mm to 3.0 mm, or about 2.0 mm. The perforations 341 may have widths ranging from 0.5 mm to 1.5 mm. The perforations 341 may have a lateral spacing, perforation lateral edge to adjacent perforation lateral edge, ranging from 2.0 mm to 8.0 mm, or 3.0 mm to 5.0 mm. Each perforation 341 may have a circumferential length between 1.0 mm, and 5.0 mm, or 1.5 mm and 2.5 mm. The perforations 341 may have a circumferential spacing, perforation end to adjacent perforation end, ranging from 3.0 mm to 5.0 mm.

The columns of perforations 341 may be arranged such that the perforations of each column are circumferentially aligned with the perforations of the adjacent columns (FIGS. 3-4). The depth, width, lateral spacing, and circumferential spacing of the perforations 341 may all effect the amount of ambient noise mitigation produced by the perforations. Generally, 2.0 mm may be an optimal depth and a greater density of perforations 341 may decrease noise more than a lesser density of perforations.

The fifth shoulder rib 150 may further have a plurality of circumferential, double blind perforations 351, or "dashes", extending linearly fully around the circumference of the fifth rib. These perforations 351 may (not shown) or may not (FIGS. 3-4) continue circumferentially through each of the lateral grooves 153. The number of columns of perforations 351 may range from 2 to 6, or 2 to 12. The perforations 351 may have depths ranging from 1.0 mm to 3.0 mm, or about 2.0 mm. The perforations 151 may have widths ranging from 0.5 mm to 1.5 mm. The perforations 351 may have a lateral spacing, perforation lateral edge to adjacent perforation lateral edge, ranging from 2.0 mm to 8.0 mm, or 3.0 mm to 5.0 mm. Each perforation 351 may have a circumferential length between 1.5 mm and 2.5 mm. The perforations 351 may have a circumferential spacing, perforation end to adjacent perforation end, ranging from 3.0 mm to 5.0 mm.

The columns of perforations 351 may be arranged such that the perforations of each column are circumferentially aligned with the perforations of the adjacent columns (FIGS. 3-4). The depth, width, lateral spacing, and circumferential spacing of the perforations 351 may all effect the amount of ambient noise mitigation produced by the perforations. Generally, 2.0 mm may be an optimal depth and a greater density of perforations 351 may decrease noise more than a lesser density of perforations.

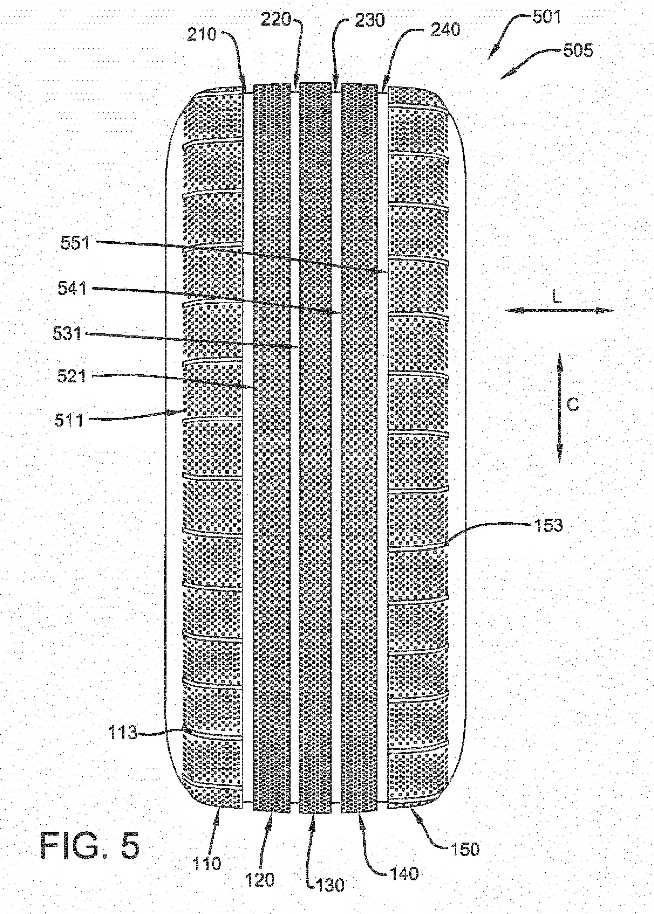

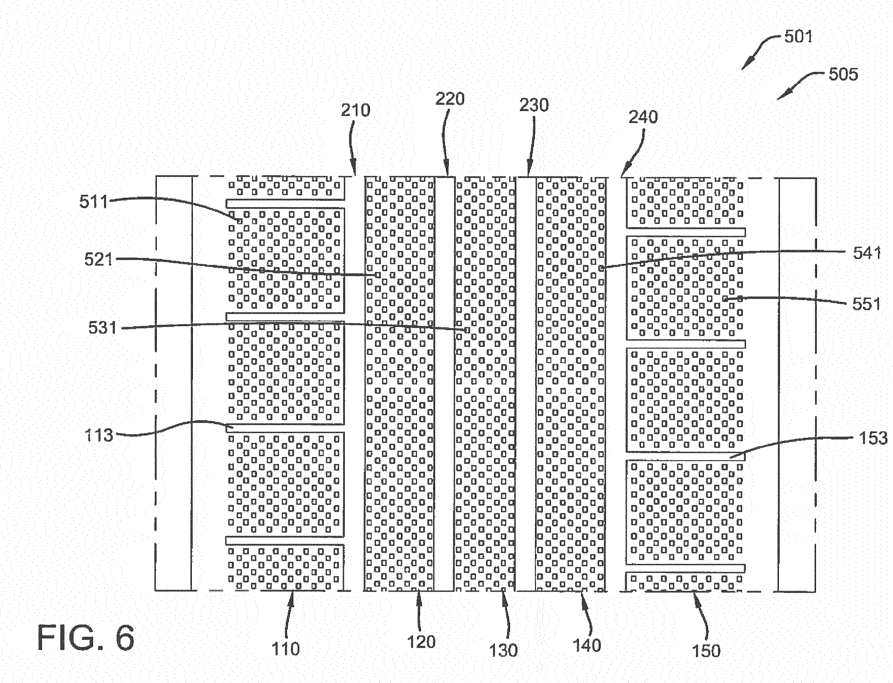

As shown in FIGS. 5-6, a pneumatic tire 501 in accordance with a third example of the present invention may include a tread 505 with a first main circumferential groove 210, a second main circumferential groove 220, a third main circumferential groove 230, and a fourth main circumferential groove 240 all extending in a circumferential direction C of the pneumatic tire 301 forming the tread 305. Like structures from FIG. 1-2 are given the same indicia. Five land portions, or ribs 110, 120, 130, 140, 150 may be formed by these main circumferential grooves 210, 220, 230, 240. Each of the first and fifth ribs 110, 150 may have additional lateral grooves 113, 153 extending laterally L across the ribs 110, 150 forming discreet and circumferentially repeating blocks, or tread elements. The main circumferential grooves 210, 220, 230, 240 may have, for example, a lateral width between 3.0 mm and 20.0 mm and an example radial depth between 5.0 mm and 13.0 mm.

The first shoulder rib 110 may further have a plurality of circumferential, double blind perforations 511, or "dashes", extending linearly fully around the circumference of the first rib. These perforations 511 may (not shown) or may not (FIGS. 5-6) continue circumferentially through each of the lateral grooves 113. The number of columns of perforations 511 may range from 2 to 6, or 12 to 24. The perforations 511 may have depths ranging from 1.0 mm to 3.0 mm, or about 2.0 mm. The perforations 511 may have widths ranging from 0.5 mm to 1.5 mm. The perforations 511 may have a lateral spacing, perforation lateral edge to adjacent perforation lateral edge, ranging from 2.0 mm to 8.0 mm, or 1.0 mm to 3.0 mm. Each perforation 511 may have a circumferential length between 0.8 mm, and 5.0 mm, or 0.9 mm and 1.2 mm. The perforations 511 may have a circumferential spacing, perforation end to adjacent perforation end, ranging from 1.0 mm to 3.0 mm.

The columns of perforations 511 may be arranged such that the perforations of each column are circumferentially offset from the perforations of the adjacent columns (FIGS. 5-6). The depth, width, lateral spacing, and circumferential spacing of the perforations 511 may all effect the amount of ambient noise mitigation produced by the perforations. Generally, 2.0 mm may be an optimal depth and a greater density of perforations 511 may decrease noise more than a lesser density of perforations.

The second shoulder rib 120 may further have a plurality of circumferential, double blind perforations 521, or "dashes", extending linearly fully around the circumference of the second rib. The number of columns of perforations 521 may range from 2 to 6, or 12 to 24. The perforations 521 may have depths ranging from 1.0 mm to 3.0 mm, or about 2.0 mm. The perforations 521 may have widths ranging from 0.5 mm to 1.5 mm. The perforations 521 may have a lateral spacing, perforation lateral edge to adjacent perforation lateral edge, ranging from 2.0 mm to 8.0 mm, or 1.0 mm to 3.0 mm. Each perforation 521 may have a circumferential length between 0.8 mm, and 5.0 mm, or 0.9 mm and 1.2 mm. The perforations 521 may have a circumferential spacing, perforation end to adjacent perforation end, ranging from 1.0 mm to 3.0 mm.

The columns of perforations 521 may be arranged such that the perforations of each column are circumferentially offset from with the perforations of the adjacent columns (FIGS. 5-6). The depth, width, lateral spacing, and circumferential spacing of the perforations 521 may all effect the amount of ambient noise mitigation produced by the perforations. Generally, 2.0 mm may be an optimal depth and a greater density of perforations 521 may decrease noise more than a lesser density of perforations.

The third shoulder rib 130 may further have a plurality of circumferential, double blind perforations 531, or "dashes", extending linearly fully around the circumference of the third rib. The number of columns of perforations 531 may range from 2 to 6, or 12 to 24. The perforations 531 may have depths ranging from 1.0 mm to 3.0 mm, or about 2.0 mm. The perforations 531 may have widths ranging from 0.5 mm to 1.5 mm. The perforations 531 may have a lateral spacing, perforation lateral edge to adjacent perforation lateral edge, ranging from 2.0 mm to 8.0 mm, or 1.0 mm to 3.0 mm. Each perforation 531 may have a circumferential length between 0.8 mm, and 5.0 mm, or 0.9 mm and 1.2 mm. The perforations 521 may have a circumferential spacing, perforation end to adjacent perforation end, ranging from 1.0 mm to 3.0 mm.

The columns of perforations 531 may be arranged such that the perforations of each column are circumferentially offset from the perforations of the adjacent columns (FIGS. 5-6). The depth, width, lateral spacing, and circumferential spacing of the perforations 531 may all effect the amount of ambient noise mitigation produced by the perforations. Generally, 2.0 mm may be an optimal depth and a greater density of perforations 531 may decrease noise more than a lesser density of perforations.

The fourth shoulder rib 140 may further have a plurality of circumferential, double blind perforations 541, or "dashes", extending linearly fully around the circumference of the fourth rib. The number of columns of perforations 541 may range from 2 to 6, or 12 to 24. The perforations 541 may have depths ranging from 1.0 mm to 3.0 mm, or about 2.0 mm. The perforations 541 may have widths ranging from 0.5 mm to 1.5 mm. The perforations 541 may have a lateral spacing, perforation lateral edge to adjacent perforation lateral edge, ranging from 2.0 mm to 8.0 mm, or 1.0 mm to 3.0 mm. Each perforation 541 may have a circumferential length between 0.8 mm, and 5.0 mm, or 0.9 mm and 1.2 mm. The perforations 541 may have a circumferential spacing, perforation end to adjacent perforation end, ranging from 1.0 mm to 3.0 mm.

The columns of perforations 541 may be arranged such that the perforations of each column are circumferentially offset from with the perforations of the adjacent columns (FIGS. 5-6). The depth, width, lateral spacing, and circumferential spacing of the perforations 541 may all effect the amount of ambient noise mitigation produced by the perforations. Generally, 2.0 mm may be an optimal depth and a greater density of perforations 541 may decrease noise more than a lesser density of perforations.

The fifth shoulder rib 150 may further have a plurality of circumferential, double blind perforations 551, or "dashes", extending linearly fully around the circumference of the fifth rib. These perforations 551 may (not shown) or may not (FIGS. 5-6) continue circumferentially through each of the lateral grooves 153. The number of columns of perforations 551 may range from 2 to 6, or 12 to 24. The perforations 551 may have depths ranging from 1.0 mm to 3.0 mm, or about 2.0 mm. The perforations 551 may have widths ranging from 0.5 mm to 1.5 mm. The perforations 551 may have a lateral spacing, perforation lateral edge to adjacent perforation lateral edge, ranging from 2.0 mm to 8.0 mm, or 1.0 mm to 3.0 mm. Each perforation 551 may have a circumferential length between 0.8 mm, and 5.0 mm, or 0.9 mm and 1.2 mm. The perforations 551 may have a circumferential spacing, perforation end to adjacent perforation end, ranging from 1.0 mm to 3.0 mm.

The columns of perforations 551 may be arranged such that the perforations of each column are circumferentially offset from the perforations of the adjacent columns (FIGS. 5-6). The depth, width, lateral spacing, and circumferential spacing of the perforations 551 may all effect the amount of ambient noise mitigation produced by the perforations. Generally, 2.0 mm may be an optimal depth and a greater density of perforations 551 may decrease noise more than a lesser density of perforations.

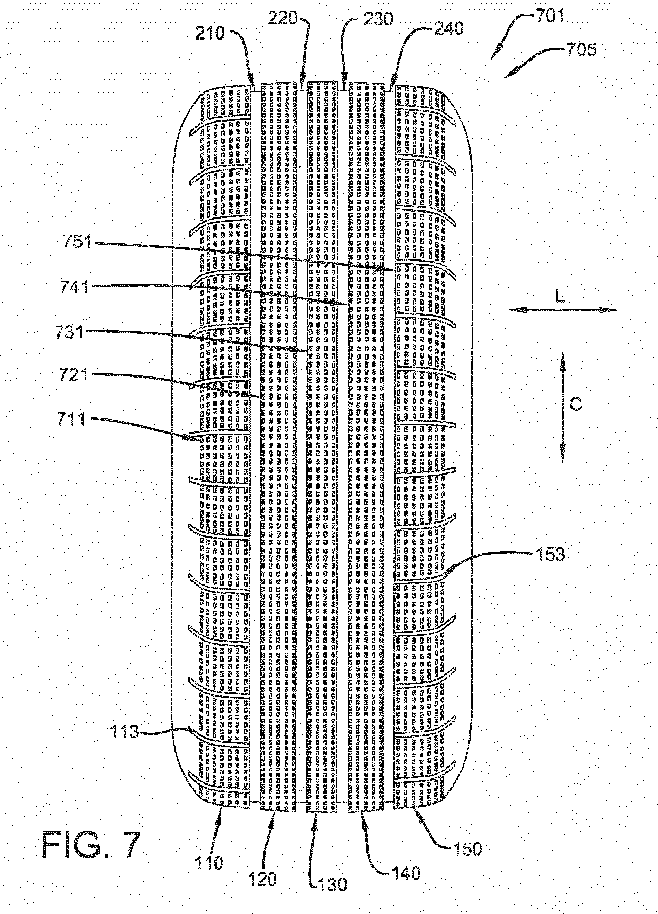

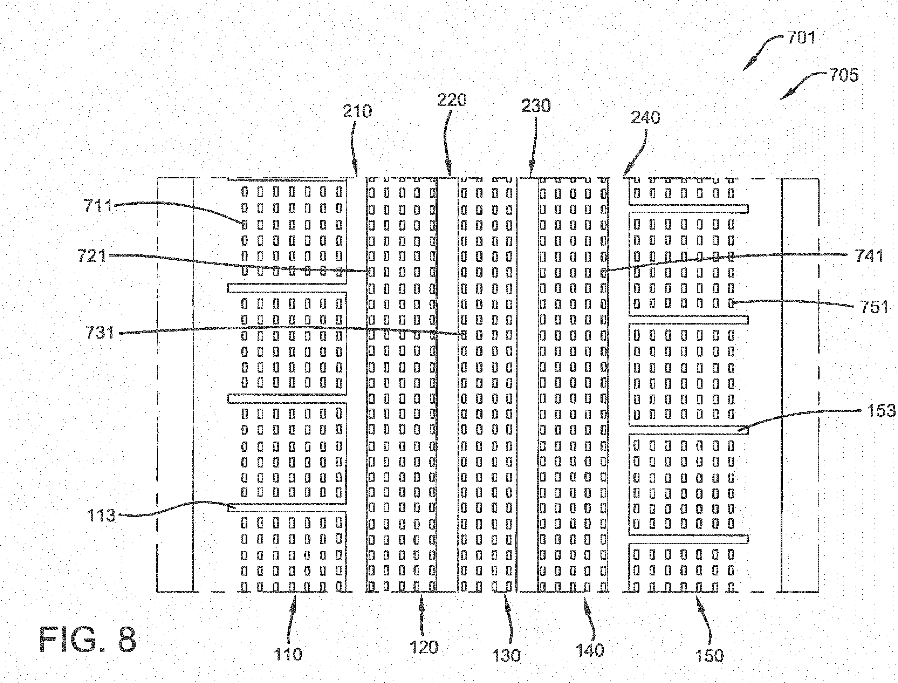

As shown in FIGS. 7-8, a pneumatic tire 701 in accordance with a second example of the present invention may include a tread 705 with a first main circumferential groove 210, a second main circumferential groove 220, a third main circumferential groove 230, and a fourth main circumferential groove 240 all extending in a circumferential direction C of the pneumatic tire 301 forming the tread 305. Like structures from FIG. 1-2 are given the same indicia. Five land portions, or ribs 110, 120, 130, 140, 150 may be formed by these main circumferential grooves 210, 220, 230, 240. Each of the first and fifth ribs 110, 150 may have additional lateral grooves 113, 153 extending laterally L across the ribs 110, 150 forming discreet and circumferentially repeating blocks, or tread elements. The main circumferential grooves 210, 220, 230, 240 may have, for example, a lateral width between 3.0 mm and 20.0 mm and an example radial depth between 5.0 mm and 13.0 mm.

The first shoulder rib 110 may further have a plurality of circumferential, double blind perforations 711, or "dashes", extending linearly fully around the circumference of the first rib. These perforations 711 may (not shown) or may not (FIGS. 7-8) continue circumferentially through each of the lateral grooves 113. The number of columns of perforations 711 may range from 2 to 6, or 12 to 24. The perforations 711 may have depths ranging from 1.0 mm to 3.0 mm, or about 2.0 mm. The perforations 711 may have widths ranging from 0.5 mm to 1.5 mm. The perforations 711 may have a lateral spacing, perforation lateral edge to adjacent perforation lateral edge, ranging from 2.0 mm to 8.0 mm, or 1.0 mm to 3.0 mm. Each perforation 711 may have a circumferential length between 1.0 mm, and 5.0 mm, or 1.5 mm and 2.5 mm. The perforations 711 may have a circumferential spacing, perforation end to adjacent perforation end, ranging from 1.0 mm to 3.0 mm.

The columns of perforations 711 may be arranged such that the perforations of each column are circumferentially aligned with the perforations of the adjacent columns (FIGS. 7-8). The depth, width, lateral spacing, and circumferential spacing of the perforations 711 may all effect the amount of ambient noise mitigation produced by the perforations. Generally, 2.0 mm may be an optimal depth and a greater density of perforations 711 may decrease noise more than a lesser density of perforations.

The second shoulder rib 120 may further have a plurality of circumferential, double blind perforations 721, or "dashes", extending linearly fully around the circumference of the second rib. The number of columns of perforations 721 may range from 2 to 6, or 12 to 24. The perforations 721 may have depths ranging from 1.0 mm to 3.0 mm, or about 2.0 mm. The perforations 721 may have widths ranging from 0.5 mm to 1.5 mm. The perforations 721 may have a lateral spacing, perforation lateral edge to adjacent perforation lateral edge, ranging from 2.0 mm to 8.0 mm, or 1.0 mm to 3.0 mm. Each perforation 721 may have a circumferential length between 1.0 mm, and 5.0 mm, or 1.5 mm and 2.5 mm. The perforations 721 may have a circumferential spacing, perforation end to adjacent perforation end, ranging from 1.0 mm to 3.0 mm.

The columns of perforations 721 may be arranged such that the perforations of each column are circumferentially aligned with the perforations of the adjacent columns (FIGS. 7-8). The depth, width, lateral spacing, and circumferential spacing of the perforations 721 may all effect the amount of ambient noise mitigation produced by the perforations. Generally, 2.0 mm may be an optimal depth and a greater density of perforations 721 may decrease noise more than a lesser density of perforations.

The third shoulder rib 130 may further have a plurality of circumferential, double blind perforations 731, or "dashes", extending linearly fully around the circumference of the third rib. The number of columns of perforations 731 may range from 2 to 6, or 12 to 24. The perforations 731 may have depths ranging from 1.0 mm to 3.0 mm, or about 2.0 mm. The perforations 731 may have widths ranging from 0.5 mm to 1.5 mm. The perforations 731 may have a lateral spacing, perforation lateral edge to adjacent perforation lateral edge, ranging from 2.0 mm to 8.0 mm, or 1.0 mm to 3.0 mm. Each perforation 731 may have a circumferential length between 1.0 mm, and 5.0 mm, or 1.5 mm and 2.5 mm. The perforations 721 may have a circumferential spacing, perforation end to adjacent perforation end, ranging from 1.0 mm to 3.0 mm.

The columns of perforations 731 may be arranged such that the perforations of each column are circumferentially aligned with the perforations of the adjacent columns (FIGS. 7-8). The depth, width, lateral spacing, and circumferential spacing of the perforations 731 may all effect the amount of ambient noise mitigation produced by the perforations. Generally, 2.0 mm may be an optimal depth and a greater density of perforations 731 may decrease noise more than a lesser density of perforations.

The fourth shoulder rib 140 may further have a plurality of circumferential, double blind perforations 741, or "dashes", extending linearly fully around the circumference of the fourth rib. The number of columns of perforations 741 may range from 2 to 6, or 12 to 24. The perforations 741 may have depths ranging from 1.0 mm to 3.0 mm, or about 2.0 mm. The perforations 741 may have widths ranging from 0.5 mm to 1.5 mm. The perforations 741 may have a lateral spacing, perforation lateral edge to adjacent perforation lateral edge, ranging from 2.0 mm to 8.0 mm, or 1.0 mm to 3.0 mm. Each perforation 741 may have a circumferential length between 1.0 mm, and 5.0 mm, or 1.5 mm and 2.5 mm. The perforations 741 may have a circumferential spacing, perforation end to adjacent perforation end, ranging from 1.0 mm to 3.0 mm.

The columns of perforations 741 may be arranged such that the perforations of each column are circumferentially aligned with the perforations of the adjacent columns (FIGS. 7-8). The depth, width, lateral spacing, and circumferential spacing of the perforations 741 may all effect the amount of ambient noise mitigation produced by the perforations. Generally, 2.0 mm may be an optimal depth and a greater density of perforations 741 may decrease noise more than a lesser density of perforations.

The fifth shoulder rib 150 may further have a plurality of circumferential, double blind perforations 751, or "dashes", extending linearly fully around the circumference of the fifth rib. These perforations 751 may (not shown) or may not (FIGS. 3-4) continue circumferentially through each of the lateral grooves 153. The number of columns of perforations 751 may range from 2 to 6, or 12 to 24. The perforations 751 may have depths ranging from 1.0 mm to 3.0 mm, or about 2.0 mm. The perforations 751 may have widths ranging from 0.5 mm to 1.5 mm. The perforations 751 may have a lateral spacing, perforation lateral edge to adjacent perforation lateral edge, ranging from 2.0 mm to 8.0 mm, or 1.0 mm to 3.0 mm. Each perforation 751 may have a circumferential length between 1.0 mm, and 5.0 mm, or 1.5 mm and 2.5 mm. The perforations 751 may have a circumferential spacing, perforation end to adjacent perforation end, ranging from 1.0 mm to 3.0 mm.

The columns of perforations 751 may be arranged such that the perforations of each column are circumferentially aligned with the perforations of the adjacent columns (FIGS. 7-8). The depth, width, lateral spacing, and circumferential spacing of the perforations 751 may all effect the amount of ambient noise mitigation produced by the perforations. Generally, 2.0 mm may be an optimal depth and a greater density of perforations 751 may decrease noise more than a lesser density of perforations.

The ribs 110, 120, 130, 140, 150 of a single tread 105, 305, 505, or 705 may have any combination of perforation patterns and dimensions, as described in FIGS. 1-2, FIGS. 3-4, FIGS. 5-6, and/or FIGS. 7-8. This may further tune the noise mitigation characteristics of such a single tread. For example, a first pattern/dimension of the first rib 110 may be different from a second pattern/dimension of the second rib 120 and a third pattern/dimension of the third rib 130 and the second pattern/dimension may be different from the first pattern/dimension and the third pattern/dimension with the first pattern/dimension being the same as a fifth pattern/dimension of the fifth rib 150 and the second pattern/dimension being the same as a fourth pattern/dimension of the fourth rib 140.

## Claims

1. A tread for a tire (101), the tread (105) comprising a first circumferential groove (210) axially separating a first circumferential rib (110) and a second circumferential rib (120), a first outer surface of the first rib (110) having at least one circumferentially extending column comprising a plurality of individual, circumferentially extending double blind perforations (111), said column extending linearly circumferentially fully around the first rib (110), wherein at least some or all of the perforations (111) of the first rib (110) have an axial width in a range of from 0.5 mm to 1.5 mm, **characterized in that** at least some or all of the perforations (111, 121) of the first rib (110) have a radial depth in a range of from 1.0 mm to 3.0 mm.

2. The tread as set forth in claim 1 further having a second outer surface of the second rib (120) having at least one circumferentially extending column comprising a plurality of individual, circumferentially extending double blind perforations (121), said column extending linearly circumferentially fully around the second rib (120).

3. The tread as set forth in claim 1 or 2 wherein the first outer surface has from 2 to 12, preferably from 2 to 10 or from 3 to 6, circumferential columns of individual, circumferentially extending double blind perforations (111), each of said columns extending linearly circumferentially fully around the first rib (110); and/or wherein the second outer surface has from 2 to 12, preferably from 2 to 10 or from 3 to 6, circumferential columns of individual, circumferentially extending double blind perforations (121), each of said columns extending linearly circumferentially fully around the second rib (120).

4. The tread as set forth in at least one of the previous claims wherein at least some or all of the perforations (111, 121) of the second rib (110, 120) have a radial depth in a range of from 1.0 mm to 3.0 mm.

5. The tread as set forth in at least one of the previous claims wherein at least some or all of the perforations (111, 121) of the second rib (110, 120) have an axial width in a range of from 0.5 mm to 1.5 mm.

6. The tread as set forth in at least one of the previous claims wherein at least some or all of the perforations (111, 121) of the first rib and/or the second rib (110, 120) have an axial spacing, perforation axial edge to adjacent perforation axial edge, in a range of from 2.0 mm to 8.0 mm.

7. The tread as set forth in at least one of the previous claims wherein at least some or all of the perforations (111, 121) of the first rib and/or the second rib (110, 120) have a circumferential length in a range of from 0.8 mm and 5.0 mm, preferably 0.9 mm to 1.2 mm, 3.0 mm to 4.0 mm or 1.5 mm to 2.5 mm.

8. The tread as set forth in at least one of the previous claims wherein the perforations (111) of the first rib (110) define a first pattern on the first outer surface and the perforations (121) of the second rib (120) define a second pattern on the second outer surface, the first pattern being different from the second pattern.

9. The tread as set forth in at least one of the previous claims, the tread (105) comprising said first circumferential groove (210) axially separating said circumferential first rib (110) and said circumferential second rib (120) and a second circumferential groove (220) axially separating the second rib (120) and a circumferential third rib (130), wherein a third outer surface of the third rib (130) has at least one circumferentially extending column comprising a plurality of individual, circumferentially extending double blind perforations (131), said column extending linearly circumferentially fully around the first rib (130).

10. The tread as set forth in claim 9 wherein the perforations (131) of the third rib (130) define a third pattern on the third outer surface, the third pattern being different from the first and/or second pattern.

11. The tread as set forth in at least one of the previous claims 9 and 10 wherein at least some or all of the perforations (131) of the third rib (130) have:
(i) a radial depth in a range of from 1.0 mm to 3.0 mm;
(ii) an axial width in a range of from 0.5 mm to 1.5 mm;
(iii) an axial spacing, perforation axial edge to adjacent perforation axial edge, in a range of from 2.0 mm to 8.0 mm.
(iv) a circumferential length in a range of from 0.8 mm and 5.0 mm, preferably 0.9 mm to 1.2 mm, 3.0 mm to 4.0 mm or 1.5 mm to 2.5 mm.

12. The tread as set forth in at least one of the previous claims 9 and 11, wherein the first outer surface has between 2 and 12 of said circumferential columns, the second outer surface has between 12 and 24 of said circumferential columns and the third outer surface has between 2 and 12 of said circumferential columns.

13. The tread as set forth in at least one of the previous claims 9 and 12, wherein the first outer surface is a shoulder rib outer surface and has of from 7 to 11, preferably 9, of said circumferential columns, the third outer surface is a central rib outer surface and has of from 3 to 5, preferably 4, of said circumferential columns, and the second outer surface is an intermediate rib outer surface located between the first outer surface and the third outer surface and has of from 4 to 6, preferably 5 of said circumferential columns.

14. The tread as set forth in at least one of the previous claims 9 to 13 wherein the perforations (111) of the first rib (110) have a circumferential length between 3.0 mm and 4.0 mm, the perforations (121) of the second rib (120) have a circumferential length between 1.5 mm and 2.5 mm and the perforations (131) of the third rib (130) have a circumferential length between 0.9 mm and 1.2 mm.

15. A tire, preferably a pneumatic tire, having a tread (105) in accordance with at least one of the previous claims.

## Patentansprüche

1. Lauffläche für einen Reifen (101), die Lauffläche (105) umfassend eine erste Umfangsrille (210), die eine erste Umfangsrippe (110) und eine zweite Umfangsrippe (120) axial trennt, eine erste Außenoberfläche der ersten Rippe (110), die mindestens eine sich in Umfangsrichtung erstreckende Spalte aufweist, umfassend eine Vielzahl von einzelnen, sich in Umfangsrichtung erstreckenden Doppelblindperforationen (111), wobei sich die Spalte in Umfangsrichtung vollständig um die erste Rippe (110) herum linear erstreckt, wobei mindestens einige oder alle der Perforationen (111) der ersten Rippe (110) eine axiale Breite in einem Bereich von 0,5 mm bis 1,5 mm aufweisen, **dadurch gekennzeichnet, dass** mindestens einige oder alle der Perforationen (111, 121) der ersten Rippe (110) eine radiale Tiefe in einem Bereich von 1,0 mm bis 3,0 mm aufweisen.

2. Lauffläche nach Anspruch 1, die ferner eine zweite Außenoberfläche der zweiten Rippe (120) aufweist, die mindestens eine sich in Umfangsrichtung erstreckende Spalte aufweist, umfassend eine Vielzahl von einzelnen, sich in Umfangsrichtung erstreckenden Doppelblindperforationen (121), wobei sich die Spalte in Umfangsrichtung vollständig um die zweite Rippe (120) herum linear erstreckt.

3. Lauffläche nach Anspruch 1 oder 2, wobei die erste Außenoberfläche von 2 bis 12, vorzugsweise von 2 bis 10 oder von 3 bis 6, Umfangsspalten von einzelnen, sich in Umfangsrichtung erstreckenden Doppelblindperforationen (111) aufweist, wobei jede der Spalten sich in Umfangsrichtung vollständig um die erste Rippe (110) herum linear erstreckt; und/oder wobei die zweite Außenoberfläche von 2 bis 12, vorzugsweise von 2 bis 10 oder von 3 bis 6, Umfangsspalten von einzelnen, sich in Umfangsrichtung erstreckenden Doppelblindperforationen (121) aufweist, wobei jede der Spalten sich in Umfangsrichtung vollständig um die zweite Rippe (120) herum linear erstreckt.

4. Lauffläche nach mindestens einem der vorhergehenden Ansprüche, wobei mindestens einige oder alle der Perforationen (111, 121) der zweiten Rippe (110, 120) eine radiale Tiefe in einem Bereich von 1,0 mm bis 3,0 mm aufweisen.

5. Lauffläche nach mindestens einem der vorhergehenden Ansprüche, wobei mindestens einige oder alle der Perforationen (111, 121) der zweiten Rippe (110, 120) eine axiale Breite in einem Bereich von 0,5 mm bis 1,5 mm aufweisen.

6. Lauffläche nach mindestens einem der vorhergehenden Ansprüche, wobei mindestens einige oder alle der Perforationen (111, 121) der ersten Rippe und/oder der zweiten Rippe (110, 120) einen axialen Abstand, axialer Perforationsrand zu angrenzendem axialen Perforationsrand, in einem Bereich von 2,0 mm bis 8,0 mm aufweisen.

7. Lauffläche nach mindestens einem der vorhergehenden Ansprüche, wobei mindestens einige oder alle der Perforationen (111, 121) der ersten Rippe und/oder der zweiten Rippe (110, 120) eine Umfangslänge in einem Bereich von 0,8 mm und 5,0 mm, vorzugsweise 0,9 mm bis 1,2 mm, 3,0 mm bis 4,0 mm oder 1,5 mm bis 2,5 mm aufweisen.

8. Lauffläche nach mindestens einem der vorhergehenden Ansprüche, wobei die Perforationen (111) der ersten Rippe (110) ein erstes Muster auf der ersten Außenoberfläche definieren und die Perforationen (121) der zweiten Rippe (120) ein zweites Muster auf der zweiten Außenoberfläche definieren, wobei das erste Muster von dem zweiten Muster verschieden ist.

9. Lauffläche nach mindestens einem der vorhergehenden Ansprüche, die Lauffläche (105) umfassend die erste Umfangsrille (210), die die erste Umfangsrippe (110) und die zweite Umfangsrippe (120) axial trennt, und eine zweite Umfangsrille (220), die die zweite Rippe (120) und eine dritte Umfangsrippe (130) axial trennt, wobei eine dritte Außenoberfläche der dritten Rippe (130) mindestens eine sich in Umfangsrichtung erstreckende Spalte aufweist, umfassend eine Vielzahl von einzelnen, sich in Umfangsrichtung erstreckenden Doppelblindperforationen (131), wobei sich die Spalte in Umfangsrichtung vollständig um die erste Rippe (130) herum linear erstreckt.

10. Lauffläche nach Anspruch 9, wobei die Perforationen (131) der dritten Rippe (130) ein drittes Muster auf der dritten Außenoberfläche definieren, wobei das dritte Muster von dem ersten und/oder dem zweiten Muster verschieden ist.

11. Lauffläche nach mindestens einem der vorhergeheden Ansprüche 9 und 10, wobei mindestens einige oder alle der Perforationen (131) der dritten Rippe (130) aufweisen:
(i) eine radiale Tiefe in einem Bereich von 1,0 mm bis 3,0 mm;
(ii) eine axiale Breite in einem Bereich von 0,5 mm bis 1,5 mm;
(iii) einen axialen Abstand, axialer Perforationsrand zu angrenzendem axialen Perforationsrand, in einem Bereich von 2,0 mm bis 8,0 mm.
(iv) eine Umfangslänge in einem Bereich von 0,8 mm und 5,0 mm, vorzugsweise 0,9 mm bis 1,2 mm, 3,0 mm bis 4,0 mm oder 1,5 mm bis 2,5 mm.

12. Lauffläche nach mindestens einem der vorhergehenden Ansprüche 9 und 11, wobei die erste Außenoberfläche zwischen 2 und 12 der Umfangsspalten aufweist, die zweite Außenoberfläche zwischen 12 und 24 der Umfangsspalten aufweist und die dritte Außenoberfläche zwischen 2 und 12 der Umfangsspalten aufweist.

13. Lauffläche nach mindestens einem der vorhergehenden Ansprüche 9 und 12, wobei die erste Außenoberfläche eine Schulterrippenaußenoberfläche ist und von 7 bis 11, vorzugsweise 9, der Umfangsspalten aufweist, die dritte Außenoberfläche eine Zentralrippenaußenoberfläche ist und von 3 bis 5, vorzugsweise 4, der Umfangsspalten aufweist, und die zweite Außenoberfläche eine Zwischenrippenaußenoberfläche ist, die zwischen der ersten Außenoberfläche und der dritten Außenoberfläche gelegen ist, und von 4 bis 6, vorzugsweise 5, der Umfangsspalten aufweist.

14. Lauffläche nach mindestens einem der vorhergehenden Ansprüche 9 bis 13, wobei die Perforationen (111) der ersten Rippe (110) eine Umfangslänge zwischen 3,0 mm und 4,0 mm aufweisen, die Perforationen (121) der zweiten Rippe (120) eine Umfangslänge zwischen 1,5 mm und 2,5 mm aufweisen, und die Perforationen (131) der dritten Rippe (130) eine Umfangslänge zwischen 0,9 mm und 1,2 mm aufweisen.

15. Reifen, vorzugsweise ein Luftreifen, der eine Lauffläche (105) nach mindestens einem der vorstehenden Ansprüche aufweist.

## Revendications

1. Bande de roulement destinée à un bandage (101), la bande de roulement (105) comprenant une première rainure circonférentielle (210) qui sépare, dans la direction axiale, une première nervure circonférentielle (110) et une deuxième nervure circonférentielle (120), une première surface externe de la première nervure (110) qui possède au moins une colonne qui s'étend dans la direction circonférentielle, qui comprend un certain nombre de doubles perforations borgnes individuelles (111) qui s'étendent dans la direction circonférentielle, ladite colonne s'étendant de manière linéaire dans la direction circonférentielle de manière complète autour de la première nervure (110); dans laquelle au moins un certain nombre ou la totalité des perforations (111) de la première nervure (110) possèdent une largeur axiale qui se situe dans une plage allant de 0,5 mm à 1,5 mm ; **caractérisé en ce qu'**au moins un certain nombre ou la totalité des perforations (111, 121) de la première nervure (110) possèdent une profondeur radiale qui se situe dans une plage allant de 1,0 mm à 3,0 mm.

2. Bande de roulement telle qu'elle est indiquée dans la revendication 1, qui possède en outre une deuxième surface externe de la deuxième nervure (120) qui possède au moins une colonne qui s'étend dans la direction circonférentielle, la colonne en question comprenant un certain nombre de doubles perforations borgnes individuelles (121) qui s'étendent dans la direction circonférentielle, ladite colonne s'étendant de manière linéaire dans la direction circonférentielle de manière complète autour de la deuxième nervure (120).

3. Bande de roulement telle qu'elle est indiquée dans la revendication 1 ou 2, dans laquelle la première surface externe possède de 2 à 12, de préférence de 2 à 10 ou de 3 à 6 colonnes circonférentielles de doubles perforations borgnes individuelles (111) qui s'étendent dans la direction circonférentielle, chacune des colonnes en question s'étendant de manière linéaire dans la direction circonférentielle de manière complète autour de la première nervure (110) ; et/ou dans laquelle la deuxième surface externe possède de 2 à 12, de préférence de 2 à 10 ou de 3 à 6 colonnes circonférentielles de doubles perforations borgnes individuelles (121) qui s'étendent dans la direction circonférentielle, chacune des colonnes en question s'étendant de manière linéaire dans la direction circonférentielle de manière complète autour de la deuxième nervure (120).

4. Bande de roulement telle qu'elle est indiquée dans au moins une des revendications précédentes, dans laquelle au moins un certain nombre ou la totalité des perforations (111, 121) de la deuxième nervure (110, 120) possèdent une profondeur radiale qui se situe dans une plage allant de 1,0 mm à 3,0 mm.

5. Bande de roulement telle qu'elle est indiquée dans au moins une des revendications précédentes, dans laquelle au moins un certain nombre ou la totalité des perforations (111, 121) de la deuxième nervure (110, 120) possèdent une largeur radiale qui se situe dans une plage allant de 0,5 mm à 1,5 mm.

6. Bande de roulement telle qu'elle est indiquée dans au moins une des revendications précédentes, dans laquelle au moins un certain nombre ou la totalité des perforations (111, 121) de la première nervure et/ou de la deuxième nervure (110, 120) possèdent un écartement axial, d'un bord axial de la perforation à un bord axial de la perforation adjacente, qui se situe dans une plage allant de 2,0 mm à 8,0 mm.

7. Bande de roulement telle qu'elle est indiquée dans au moins une des revendications précédentes, dans laquelle au moins un certain nombre ou la totalité des perforations (111, 121) de la première nervure et/ou de la deuxième nervure (110, 120) possèdent une longueur circonférentielle qui se situe dans une plage allant de 0,8 mm à 5,0 mm, de préférence de 0,9 mm à 1,2 mm, de 3,0 mm à 4,0 mm ou de 1,5 mm à 2,5 mm.

8. Bande de roulement telle qu'elle est indiquée dans au moins une des revendications précédentes, dans laquelle les perforations (111) de la première nervure (110) définissent un premier motif sur la première surface externe et les perforations (121) de la deuxième nervure (120) définissent un deuxième motif sur la deuxième surface externe, le premier motif étant différent du deuxième motif.

9. Bande de roulement telle qu'elle est indiquée dans au moins une des revendications précédentes, la bande de roulement (105) comprenant ladite première rainure circonférentielle (210) qui sépare, dans la direction axiale, ladite première nervure circonférentielle (110) et ladite deuxième nervure circonférentielle (120) et une deuxième rainure circonférentielle (200) qui sépare, dans la direction axiale, la deuxième nervure (120) et une troisième nervure circonférentielle (130) ; dans laquelle une troisième surface externe de la troisième nervure (130) possède au moins une colonne qui s'étend dans la direction circonférentielle qui comprend un certain nombre de doubles perforations borgnes individuelles (131) qui s'étendent dans la direction circonférentielle, ladite colonne s'étendant de manière linéaire dans la direction circonférentielle de manière complète autour de la première nervure (130).

10. Bande de roulement telle qu'elle est indiquée à la revendication 9, dans laquelle les perforations (131) de la troisième nervure (130) définissent un troisième motif sur la troisième surface externe, le troisième motif étant différent du premier et/ou du deuxième motif.

11. Bande de roulement telle qu'elle est indiquée dans au moins une des revendications précédentes 9 et 10 ; dans laquelle au moins un certain nombre des perforations (131) de la troisième nervure (130), ou la totalité de ces dernières possèdent :
(i) une profondeur radiale qui se situe dans une plage allant de 1,0 mm à 3,0 mm;
(ii) une largeur axiale qui se situe dans une plage allant de 0,5 mm à 1,5 mm ;
(iii) un écartement spatial, d'un bord axial de la perforation à un bord axial de la perforation adjacente, qui se situe dans une plage allant de 2,0 mm à 8,0 mm ;
iv) une longueur circonférentielle qui se situe dans une plage allant de 0,8 mm à 5,0 mm, de préférence de 0,9 mm à 1,2 mm, de 3,0 mm à 4,0 mm ou de 1,5 mm à 2,5 mm.

12. Bande de roulement telle qu'elle est indiquée dans au moins une des revendications précédentes 9 et 11 ; dans laquelle la première surface externe possède entre 2 et 12 colonnes circonférentielles en question, la deuxième surface externe possède entre 12 et 24 colonnes circonférentielles en question et la troisième surface externe possède entre 2 et 12 colonnes circonférentielles en question.

13. Bande de roulement telle qu'elle est indiquée dans au moins une des revendications précédentes 9 et 12; dans laquelle la première surface externe représente une surface externe d'une nervure d'épaulement qui possède de 7 à 11, de préférence 9 colonnes circonférentielles en question, la troisième surface externe représente une surface externe d'une nervure centrale qui possède de 3 à 5, de préférence 4 colonnes circonférentielles en question et la deuxième surface externe représente une surface externe d'une nervure intermédiaire, qui est située entre la première surface externe et la troisième surface externe et qui possède de 4 à 6, de préférence 5 colonnes circonférentielles en question.

14. Bande de roulement telle qu'elle est indiquée dans au moins une des revendications précédentes 9 à 13; dans laquelle les perforations (111) de la première nervure (110) possèdent une longueur circonférentielle qui se situe entre 3,0 mm et 4,0 mm, les perforations (121) de la deuxième nervure (120) possèdent une longueur circonférentielle qui se situe entre 1,5 mm et 2,5 mm, et les perforations (131) de la troisième nervure (130) possèdent une longueur circonférentielle qui se situe entre 0,9 mm et 1,2 mm.

15. Bandage, de préférence bandage pneumatique, qui possède une bande de roulement (105) en conformité avec au moins une des revendications précédentes.
